(19) **Europäisches Patentamt**

**European Patent Office**

**Office européen des brevets**

(11) **EP 1 371 515 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
***B60L 3/00*** *(2006.01)* ***B61C 9/38*** *(2006.01)*

(21) Anmeldenummer: **03013121.3**

(22) Anmeldetag: **11.06.2003**

(54) **Verfahren und Einrichtung zum Erfassen von Fehlstellungen einer Kardanwellenanordnung**

Method and device for detecting misalignments of a cardan shaft assembly

Procédure et dispositif pour détecter des défauts d'alignement d'un ensemble d'un arbre à cardan

(84) Benannte Vertragsstaaten:
**AT BE BG CH CY CZ DE DK EE ES FI FR GB GR HU IE IT LI LU MC NL PT RO SE SI SK TR**

(30) Priorität: **14.06.2002 DE 10227412**

(43) Veröffentlichungstag der Anmeldung:
**17.12.2003 Patentblatt 2003/51**

(73) Patentinhaber: **Bombardier Transportation GmbH**
**13627 Berlin (DE)**

(72) Erfinder: **Häse, Peter, Dr.-Ing.**
**8610 Uster (CH)**

(74) Vertreter: **Cohausz & Florack**
**Patent- und Rechtsanwälte**
**Bleichstrasse 14**
**40211 Düsseldorf (DE)**

(56) Entgegenhaltungen:
**EP-A- 0 826 549 DE-A- 19 506 471**
**DE-A- 19 725 090 US-A- 5 635 810**
**US-A- 5 980 094**

EP 1 371 515 B1

**Beschreibung**

Die vorliegende Erfindung betrifft ein Verfahren zum Erfassen von Fehlstellungen zwischen Antriebswelle und Abtriebswelle einer Kardanwellenanordnung, insbesondere im Bereich des Antriebsstrangs eines Schienenfahrzeugs, die mit einer Drehfeldmaschine gekoppelt ist. Sie betrifft weiterhin eine entsprechende Einrichtung zur Durchführung des Verfahrens.

Bei heute üblichen Fahrzeugantrieben, insbesondere bei Antrieben für Schienenfahrzeuge, werden häufig im Antriebsstrang mit dem Läufer der Drehfeldmaschine gekoppelte Kardanwellenanordnungen, meist in Form so genannter Kreuzgelenkwellen, eingesetzt, um sich im Betrieb ergebende Lageänderungen der Elemente des Antriebsstrangs zueinander ausgleichen zu können und so - zumindest kurzfristig - die sich aus dieser Lageänderungen ergebenden Belastungen des Antriebsstrangs zu reduzieren.

Im Normalfall sollten die Achsen von Antriebswelle und Abtriebswelle der Kardanwellenanordnung, beispielsweise einer Kreuzgelenkwelle, zueinander parallel verlaufen. Im Fall einer einfachen Kardanwelle sollten sie miteinander fluchten. Der Ausgleich der Lageänderungen über eine solche häufig auch als Gelenkwelle bezeichnete Kardanwelle sollte dann in der Regel jedoch nur den Ausnahmefall darstellen.

Ergibt sich im Betrieb eine zumindest über längere Strekken bleibende Winkelabweichung zwischen Antriebswelle und Abtriebswelle der Kardanwellenanordnung werden in der Kardanwellenanordnung Schwingungen mit einer Frequenz erzeugt, die dem zweifachen der aktuellen Drehzahl der Kardanwellenanordnung entspricht. Die Amplitude dieser Schwingungen hängt dabei vom Grad der im folgenden als Fehlstellung bezeichneten Winkelabweichung zwischen Antriebswelle und Abtriebswelle der Kardanwellenanordnung ab.

Überschreitet die Amplitude dieser Schwingungen einen gewissen zulässigen Wert bzw. liegt die Frequenz der Schwingungen im Resonanzbereich einzelner Teile der Kardanwellenanordnung selbst oder des Antriebsstrangs, so kann es zu einer nachhaltigen Schädigung der Kardanwellenanordnung oder angrenzender Bauteile des Antriebsstrangs bis hin zu deren Versagen kommen.

Eine vergleichbare Situation ergibt sich natürlich auch beim Antrieb einer als Generator arbeitenden Drehfeldmaschine über eine solche Kardanwellenanordnung.

Um die genannten Schädigungen zu vermeiden besteht somit grundsätzlich das Bedürfnis, derartige Fehlstellungen einer Kardanwellenanordnung frühzeitig zu erkennen , um entsprechende Gegenmaßnahmen, beispielsweise eine Abschaltung des Antriebs oder dergleichen, einleiten zu können.

Grundsätzlich besteht zur Erfassung derartiger Fehlstellungen der Kardanwellenanordnung die Möglichkeit, die Frequenz der infolge der Fehlstellungen überlagerten Drehzahlschwingung, welche dem Zweifachen der aktuellen Drehzahl entspricht, beispielsweise durch einen Bandpass herauszufiltern und nachfolgend, z. B. durch Überwachung eines geeignet gewählten Schwellwertes, auszuwerten. Hierbei besteht jedoch das Problem, dass die Frequenz des Bandpasses entsprechend der Drehzahl der Kardanwellenanordnung nachgeführt werden muss, wodurch sich eine vergleichsweise aufwändige Messanordnung ergibt.

Der vorliegenden Erfindung liegt daher die Aufgabe zu Grunde, ein Verfahren bzw. eine Einrichtung der eingangs genannten Art zur Verfügung zustellen, welches bzw. welche die oben genannten Nachteile nicht oder zumindest in geringerem Maße aufweist und insbesondere eine einfache und zuverlässige Erfassung von Fehlstellungen der Kardanwellenanordnung ermöglicht.

Die vorliegende Erfindung löst diese Aufgabe ausgehend von einem Verfahren gemäß den Oberbegriff des Anspruchs 1 durch die im kennzeichnenden Teil des Anspruchs 1 angegebenen Merkmale. Sie löst diese Aufgabe weiterhin ausgehend von einer Einrichtung gemäß den Oberbegriff des Anspruchs 10 durch die im kennzeichnenden Teil des Anspruchs 10 angegebenen Merkmale.

Der vorliegenden Erfindung liegt die technische Lehre zu Grunde, dass man eine besonders einfache und zuverlässige Erfassung von Fehlstellungen der Kardanwellenanordnung erzielen kann, wenn ein für den Grad einer Fehlstellung repräsentatives Fehlstellungssignal durch Korrelation eines für das Drehfeld der Drehfeldmaschine charakteristischen ersten Signals mit einem für die Drehbewegung der Kardanwellenanordnung charakteristischen zweiten Signal ermittelt wird.

Durch eine geeignete Korrelation zwischen dem Drehfeld als einer Eingangsgröße der Drehfeldmaschine und der Drehbewegung der Kardanwellenanordnung als einer Ausgangsgröße des Systems Drehfeldmaschine-Kardanwellenanordnung lassen sich in vorteilhafter Weise einfache Rückschlüsse auf die entsprechende Übertragungsfunktion bzw. Beschreibungsfunktion des Systems Drehfeldmaschine-Kardanwellenanordnung ziehen. Diese Übertragungsfunktion bzw. Beschreibungsfunktion hängt wiederum entscheidend vom Grad der Fehlstellung der Kardanwellenanordnung ab, sodass aus den Erkenntnissen über die Übertragungsfunktion in einfacher Weise Rückschlüsse auf den Grad der Fehlstellung gezogen werden können.

Die Erfindung weist weiterhin den Vorteil auf, dass in der Leittechnik moderner Antriebe in der Regel sowohl für das Drehfeld der Drehfeldmaschine charakteristische Signale als auch für die Drehbewegung der Kardanwellenanordnung charakteristische Signale zur Verfügung stehen, sodass auch das erste und zweite Signal unmittelbar zur Verfügung stehen oder in einfacher Weise aus den zur Verfügung stehenden Signalen gewonnen werden können.

Die Korrelation zwischen dem ersten und zweiten Signal kann dabei auf unterschiedliche Weise erfolgen. Eine besonders einfache und wenig störungsanfällige Variante des erfindungsgemäßen Verfahrens zeichnet sich dadurch aus, dass die Korrelation nach Art einer an sich bekannten orthogonalen Korrelation erfolgt. Durch eine solche orthogonale Korrelation aus einem für ein Eingangsignal des Systems charakteristischen Signal und einem für ein Ausgangsignal des Systems charakteristischen Signal kann in einfacher Weise ein Rückschluss auf die entsprechende Übertragungsfunktion bzw. Beschreibungsfunktion des Systems gezogen werden. Zudem erübrigt sich hierbei ein Nachführen der Erfassung in Abhängigkeit von der Drehzahl, da Änderungen der Drehzahl auf Grund der Verwendung von ersten und zweiten Signalen, die mit der Drehzahl im wesentlichen unmittelbar zusammenhängen, bei dem vorgeschlagenen Verfahren automatisch Berücksichtigung finden.

Eine solches Vorgehen nach Art einer orthogonalen Korrelation bringt weiterhin den Vorteil mit sich, dass Störungen ohne periodischen Anteil der zu untersuchenden Frequenz, beispielsweise Störungen statistischer Art, bei geeigneter Auswahl der Verfahrensparameter nahezu beliebig weit unterdrückt werden können und daher in entsprechend geringem Maße in das Ergebnis einfließen.

Bevorzugt werden in einem ersten Schritt eine erste Komponente des ersten Signals und eine dazu orthogonale zweite Komponente des ersten Signals gebildet. In einem zweiten Schritt werden dann die erste und zweite Komponente des ersten Signals nach Art einer orthogonalen Korrelation mit dem zweiten Signal zur Ermittlung des Fehlstellungssignals korreliert.

Hierbei beinhaltet der zweite Schritt vorzugsweise folgenden Ablauf. Zunächst wird die erste Komponente unter Bildung eines ersten Produkts mit dem zweiten Signal multipliziert sowie die zweite Komponente unter Bildung eines zweiten Produkts mit dem zweiten Signal multipliziert. Anschließend wird das erste Produkt unter Bildung eines ersten Integrals integriert. Ebenso wird das zweite Produkt unter Bildung eines zweiten Integrals integriert. Das erste Integral wird dann unter Bildung eines ersten Quadrats quadriert. Gleiches erfolgt für das zweite Integral unter Bildung eines zweiten Quadrats. Schließlich werden das erste und zweite Quadrat zu einer ersten Summe addiert und es wird zur Bildung des Fehlstellungssignals die Quadratwurzel der ersten Summe gebildet.

Diese Quadratwurzel stellt letztlich einen für den Betrag der als komplexe Zahl dargestellten Übertragungsfunktion bzw. Beschreibungsfunktion des Systems Drehfeldmaschine-Kardanwellenanordnung repräsentativen Wert dar. Dieser Wert kann dann zur Erfassung des Vorliegens einer nicht mehr akzeptablen Fehlstellung beispielsweise mit einem bestimmten Schwellenwert verglichen werden. Wird dieser Schwellenwert überschritten, kann beispielsweise ein entsprechendes Warnsignal ausgegeben werden oder ein Signal an die Steuerung der Drehfeldmaschine ausgegeben werden, welche dann in Abhängigkeit von diesem Signal entsprechende Gegenmaßnahmen bis hin zur Abschaltung der Drehfeldmaschine einleitet.

Bei dem ersten Signal handelt es sich bevorzugt um ein Signal, dessen Frequenz direkt proportional zur Drehfeldfrequenz ist, wodurch in vorteilhafter Weise die oben genannte unmittelbare Relation zur Drehzahl hergestellt ist. Vorzugsweise wird als erstes Signal ein an die bei Fehlstellung an der Kardanwellenanordnung auftretende Schädigungsfrequenz angepasstes für- das Drehfeld charakteristisches Signal verwendet. Hierbei kann es sich beispielsweise um ein für den Fluss charakteristisches Signal handeln.

Diese Schädigungsfrequenz $f_s$ liegt wie erwähnt beim Zweifachen der aktuellen Drehzahl $n_{kw}$ der Kardanwellenanordnung.

$$(1) \quad f_S = 2\ n_{KW}.$$

Bei einer Drehfeldmaschine mit der Polpaarzahl N rotiert das Drehfeld je nach Bauart und anliegender Last im wesentlichen mit der N-fachen Drehzahl $n_L$ des Läufers der Drehfeldmaschine. Die Abweichungen von diesem Zusammenhang, die sich beispielsweise bei Asynchronmaschinen - anders als bei Synchronmaschinen - je nach anliegender Last ergeben, liegen üblicherweise im Bereich weniger Prozentpunkte. Sie sind für die Anwendung der Erfindung nicht hinderlich. Die Drehfeldfrequenz $f_F$ beträgt somit das N-fache der Drehzahl $n_L$ des Läufers:

$$(2) \quad f_F = N\ n_L.$$

Bei einem Übersetzungsverhältnis i zwischen der Drehzahl $n_{KW}$ der Kardanwellenanordnung und der Drehzahl $n_L$ des Läufers der Drehfeldmaschine mit

$$(3) \quad n_{KW} = i \; n_L$$

ergibt sich somit für die Schädigungsfrequenz $f_S$ und damit auch für die Frequenz $f_1$ des ersten Signals die Gleichung

$$(4) \quad f_1 = f_S = 2 \; i \; n_L = (2 \; i \; / \; N) \; f_F.$$

Mit anderen Worten ist bei einer Drehfeldmaschine mit einer Polpaarzahl N und einem Übersetzungsverhältnis i zwischen der Drehzahl $n_{KW}$ der Kardanwellenanordnung und der Drehzahl $n_L$ des Läufers der Drehfeldmaschine das erste Signal vorzugsweise von einem Signal gebildet, dessen Frequenz im wesentlichen dem 2i/N-fachen der Drehfeldfrequenz entspricht.

Im einfachsten Fall einer Drehfeldmaschine mit der Polpaarzahl 2 und einem Übersetzungsverhältnis i = 1 zwischen der Drehzahl $n_{KW}$ der Kardanwellenanordnung und der Drehzahl $n_L$ des Läufers der Drehfeldmaschine, d. h. einer unmittelbar mit dem Läufer verbundenen Kardanwellenanordnung, ist die Frequenz $f_1$ des ersten Signals somit gleich der Drehfeldfrequenz $f_F$. Hierbei kann dann also unmittelbar ein in der Leittechnik ohnehin zur Verfügung stehendes, für das Drehfeld repräsentatives Signal mit der entsprechenden Frequenz verwendet werden.

Bei bevorzugten Varianten des erfindungsgemäßen Verfahrens ist das erste Signal in der geschilderten Weise proportional zu einer Schätzgröße für das Drehfeld, beispielsweise einer Schätzgröße für den Fluss. In dem oben beschriebenen einfachsten Fall (N = 2, i = 1) kann dann die Schätzgröße unmittelbar als erstes Signal verwendet werden. Alternativ kann das erste Signal in der geschilderten Weise auch proportional zu einer mit dem Drehfeld gekoppelten Größe sein. Bei einer solchen mit dem Drehfeld gekoppelten Größe kann es sich beispielsweise um die entsprechenden in den Wicklungen der Drehfeldmaschine bei der Erzeugung des Drehfelds gemessenen Spannungen und/oder Ströme handeln.

Bei dem für die Drehbewegung der Kardanwellenanordnung charakteristischen zweiten Signal kann es sich beispielsweise um ein zur Drehzahl der Kardanwellenanordnung und damit zur Drehzahl des Läufers der Drehfeldmaschine proportionales Signal handeln. So kann es sich beispielsweise bei dem zweiten Signal direkt um die durch einen entsprechenden Drehzahlsensor aufgenommene Drehzahl der Kardanwellenanordnung oder des Läufers der Drehfeldmaschine handeln. Alternativ kann es sich auch um ein zum Drehmoment an der Kardanwellenanordnung und damit zum Drehmoment am Läufer der Drehfeldmaschine proportionales Signal handeln. Im einfachsten Fall mit dem Übersetzungsverhältnis i = 1 sind die Drehzahl der Kardanwellenanordnung und die Drehzahl des Läufers bzw. das Drehmoment an der Kardanwellenanordnung und das Drehmoment am Läufer identisch.

Die vorliegende Erfindung betrifft weiterhin eine entsprechende Einrichtung zum Erfassen von Fehlstellungen zwischen Antriebswelle und der Abtriebswelle einer Kardanwellenanordnung, insbesondere im Bereich des Antriebsstrangs eines Schienenfahrzeugs, die mit einer Drehfeldmaschine gekoppelt ist. Erfindungsgemäß umfasst diese Einrichtung eine Ermittlungseinrichtung zum Ermitteln eines für den Grad einer Fehlstellung repräsentativen Fehlstellungssignals durch Korrelation eines für das Drehfeld der Drehfeldmaschine charakteristischen ersten Signals mit einem für die Drehbewegung der Kardanwellenanordnung charakteristischen zweiten Signal.

Eine solche Einrichtung eignet sich zur Durchführung des erfindungsgemäßen Verfahrens. Die Merkmale und Vorteile einer solchen Einrichtung wurden bereits vorstehend anhand des erfindungsgemäßen Verfahrens beschrieben.

Die Ermittlungseinrichtung kann nach den oben beschriebenen Korrelationsverfahren arbeiten. Bevorzugt ist sie zum Durchführen der Korrelation nach Art einer orthogonalen Korrelation ausgebildet ist, wodurch besonders stabile und zuverlässige Ergebnisse erzielt werden können.

Zum Erzeugen der zueinander orthogonalen Komponenten des ersten Signals, welche für die nach Art einer orthogonalen Korrelation erfolgende Korrelation verwendet werden, umfasst die Ermittlungseinrichtung bei bevorzugten Varianten der erfindungsgemäßen Einrichtung eine mit der ersten Gebereinrichtung verbundene Orthogonalisierungseinrichtung zur Zerlegung des ersten Signals in eine erste Komponente und eine dazu orthogonale zweite Komponente. Es versteht sich jedoch, dass eine solche Orthogonalisierungseinrichtung häufig entfallen kann, da die entsprechenden orthogonalen Komponenten in der Leittechnik des Antriebs häufig ohnehin vorhanden sind, beispielsweise auf entsprechende Weise berechnet sind. Weiterhin ist eine entsprechende Korrelationseinrichtung zum Korrelieren der ersten und zweiten Komponente nach Art einer orthogonalen Korrelation mit dem zweiten Signal zur Ermittlung des Fehlstellungssignals vorgesehen.

Bei besonders vorteilhaften, weil einfach aufgebauten Varianten der erfindungsgemäßen Einrichtung umfasst die Korrelationseinrichtung folgende Bestandteile:

- eine mit der Orthogonalisierungseinrichtung verbundene erste Multipliziereinrichtung zur Bildung eines ersten Produkts aus der ersten Komponente und dem zweiten Signal sowie eine mit der Orthogonalisierungseinrichtung verbundene zweite Multipliziereinrichtung zur Bildung eines zweiten Produkts aus der zweiten Komponente und dem zweiten Signal.

- eine mit der ersten Multipliziereinrichtung verbundene erste Integriereinrichtung zur Bildung eines ersten Integrals über dem ersten Produkt sowie eine mit der zweiten Multipliziereinrichtung verbundene zweite Integriereinrichtung zur Bildung eines zweiten Integrals über dem zweiten Produkt.

- eine mit der ersten Integriereinrichtung verbundene erste Quadriereinrichtung zur Bildung eines ersten Quadrats aus dem ersten Integral sowie eine mit der zweiten Integriereinrichtung verbundene zweite Quadriereinrichtung zur Bildung eines zweiten Quadrats aus dem zweiten Integral.

- eine mit der ersten und zweiten Quadriereinrichtung verbundene Addiereinrichtung zur Bildung einer ersten Summe aus dem ersten und zweiten Quadrat sowie

- eine mit der Addiereinrichtung verbundene Quadratwurzeleinrichtung zur Bildung des Fehlstellungssignals in Form der. Quadratwurzel der ersten Summe.

Die Orthogonalisierungseinrichtung, die Multipliziereinrichtung, die Integriereinrichtung, die Quadriereinrichtung, die Addiereinrichtung, die Quadratwurzeleinrichtung können dabei jeweils durch einfache elektronische Bauteile gebildet sein. Die Integriereinrichtungen können beispielsweise jeweils von einem einfachen Tiefpass gebildet sein.

Bevorzugt ist eine mit der Ermittlungseinrichtung verbundene erste Gebereinrichtung vorgesehen, die zur Weitergabe eines ersten Signals in Form eines Signals, dessen Frequenz direkt proportional zur Drehfeldfrequenz ist, wodurch in vorteilhafter Weise die oben genannte unmittelbare Relation zur Drehzahl hergestellt ist.

Vorzugsweise wird als erstes Signal ein an die bei Fehlstellung an der Kardanwellenanordnung auftretende Schädigungsfrequenz angepasstes für das Drehfeld charakteristisches Signal verwendet, weshalb die erste Gebereinrichtung bevorzugt zur Ausgabe eines ersten Signals in Form eines an die bei Fehlstellung an der Kardanwellenanordnung auftretende Schädigungsfrequenz angepassten, für das Drehfeld charakteristischen Signals ausgebildet ist.

In den Fällen einer Drehfeldmaschine mit einer Polpaarzahl N und einem Übersetzungsverhältnis i zwischen der Drehzahl $n_{KW}$ der Kardanwellenanordnung und Drehzahl $n_L$ des Läufers der Drehfeldmaschine ist die erste Gebereinrichtung vorzugsweise zur Ausgabe eines ersten Signals ausgebildet, dessen Frequenz im wesentlichen dem 2i/N-fachen der Drehfeldfrequenz entspricht.

Besonders vorteilhafte Varianten der erfindungsgemäßen Einrichtung zeichnen sich dadurch aus, dass die erste Gebereinrichtung zur Ausgabe eines ersten Signals ausgebildet ist, das proportional zu einer Schätzgröße für das Drehfeld oder proportional zu einer mit dem Drehfeld gekoppelten Größe ist.

Bei günstigen Weiterbildungen in der erfindungsgemäßen Einrichtung ist eine mit der Ermittlungseinrichtung verbundene zweite Gebereinrichtung vorgesehen, die zur Ausgabe eines zweiten Signals ausgebildet ist, das proportional zur Drehzahl des Läufers der Drehfeldmaschine oder proportional zur Drehzahl der Kardanwellenanordnung ist. A1-ternativ kann die zweite Einrichtung zur Ausgabe eines zweiten Signals ausgebildet sein, welches proportional zum Drehmoment am Läufer der Drehfeldmaschine ist oder welches proportional zum Drehmoment an der Kardanwellenanordnung ist.

Die vorliegende Erfindung betrifft weiterhin ein Schienenfahrzeug mit einer Antriebseinrichtung, die eine Drehfeldmaschine und eine damit gekoppelte Kardanwellenanordnung umfasst, und mit einer erfindungsgemäßen Einrichtung zum Erfassen von Fehlstellungen zwischen der Antriebswelle und der Abtriebswelle der Kardanwellenanordnung. Die erfindungsgemäßen Einrichtung zum Erfassen von Fehlstellungen der Kardanwellenanordnung ist dann bevorzugt mit der Steuereinrichtung für die Drehfeldmaschine verbunden, welche in Abhängigkeit vom ermittelten Fehlstellungssignal auf die Drehfeldmaschine oder andere Einrichtungen des Schienenfahrzeugs einwirkt.

Es versteht sich, dass es sich bei der vorbeschriebenen Drehfeldmaschine sowohl um einen Generator als auch dem einen Motor handeln kann, der über die Kardanwellenanordnung angetrieben wird bzw. die Kardanwellenanordnung antreibt.

Weitere bevorzugte Ausführungsformen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

Figur 1    eine schematische Darstellung einer Antriebseinrichtung mit einer bevorzugten Ausführung der erfindungsgemäßen Einrichtung zur Erfassung von Fehlstellungen einer Kardanwellenanordnung;

Figur 2    ein Blockschaltbild der Einrichtung aus Figur 1;

Figur 3    eine schematische Darstellung einer weiteren Antriebseinrichtung mit einer bevorzugten Ausführung der erfindungsgemäßen Einrichtung zur Erfassung von Fehlstellungen einer Kardanwellenanordnung.

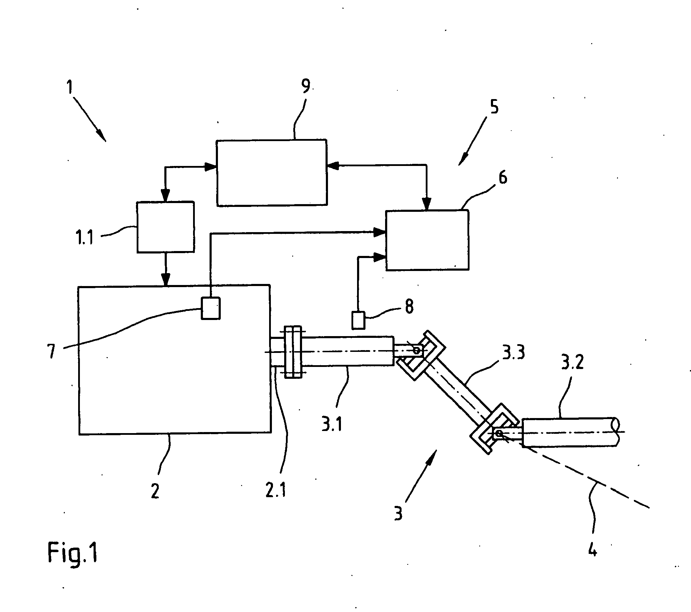

Figur 1 zeigt eine schematische Darstellung der elektrischen Antriebseinrichtung 1 eines Schienenfahrzeugs mit einer Stromrichtereinrichtung 1.1, die eine Drehfeldmaschine 2 speist, und einer mit dem Läufer 2.1 der Drehfeldmaschine 2 unmittelbar gekoppelten Kardanwellenanordnung in Form einer Kreuzgelenkwelle 3. Die Stromrichtereinrichtung 1.1 wird dabei über eine geeignete - nicht dargestellte - Energieversorgung gespeist.

Die Drehachsen der Antriebswelle 3.1 und der Abtriebswelle 3.2 der Kardanwellenanordnung 3, welche über die Zwischenwelle 3.3 verbunden sind, verlaufen im Normalbetrieb parallel zueinander. Ergibt sich im Betrieb eine zumindest über längere Strecken bleibende Winkelabweichung zwischen Antriebswelle 3.1 und Abtriebswelle 3.2 der Kardanwellenanordnung 3, werden in der Kardanwellenanordnung 3 Schwingungen mit einer Frequenz $f_s$ erzeugt, die dem zweifachen der aktuellen Drehzahl $n_{KW}$ der Kardanwellenanordnung 3 entspricht. Eine solche Winkelabweichung bzw. Fehlstellung der Kardanwellenanordnung 3 ist - aus Gründen der Deutlichkeit in extremer Form - in Figur 1 durch die gestrichelte Linie 4 angedeutet, welche die Drehachse der fehlgestellten Abtriebswelle darstellen soll. Die Amplitude dieser Schwingungen hängt vom Grad der als Fehlstellung bezeichneten Winkelabweichung zwischen Antriebswelle 3.1 und Abtriebswelle 3.2 der Kardanwellenanordnung 3 ab.

Überschreitet die Amplitude dieser Schwingungen einen gewissen zulässigen Wert bzw. liegt die Frequenz $f_s$ der Schwingungen im Resonanzbereich einzelner Teile der Kardanwellenanordnung 3 selbst oder des Antriebsstrangs, so kann es zu einer nachhaltigen Schädigung der Kardanwellenanordnung 3 oder angrenzender Bauteile des Antriebsstrangs bis hin zu deren Versagen kommen.

Um eine solche Fehlstellung rechtzeitig und zuverlässig zu detektieren ist eine erfindungsgemäße Einrichtung 5 zur Erfassung von Fehlstellungen der Kardanwellenanordnung 3 vorgesehen. Diese Einrichtung 5 dient zur Durchführung des erfindungsgemäßen Verfahrens und umfasst eine Ermittlungseinrichtung 6.

Diese Ermittlungseinrichtung 6 dient zum Ermitteln eines für den Grad einer Fehlstellung der Kardanwellenanordnung 3 repräsentativen Fehlstellungssignals $S_F$ durch Korrelation eines für das Drehfeld der Drehfeldmaschine charakteristischen ersten Signals $S_1$ mit einem für die Drehbewegung der Kardanwellenanordnung charakteristischen zweiten Signal $S_2$.

Das erste Signal $S_1$ wird von einer im Bereich der Drehfeldmaschine 2 angeordneten ersten Gebereinrichtung 7 geliefert, während das zweite Signal $S_2$ von einer im Bereich der Kardanwellenanordnung 3 angeordneten zweiten Gebereinrichtung geliefert wird.

Die Ermittlungseinrichtung 6 führt eine Korrelation nach Art einer orthogonalen Korrelation durch. Durch diese Korrelation zwischen dem Drehfeld als Eingangsgröße des Systems Drehfeldmaschine-Kardanwellenanordnung und der Drehbewegung der Kardanwellenanordnung 3 als Ausgangsgröße des Systems Drehfeldmaschine-Kardanwellenanordnung lassen sich aus dem gewonnenen Fehlstellungssignal $S_F$ in vorteilhafter Weise einfache Rückschlüsse auf die Übertragungsfunktion bzw. Beschreibungsfunktion dieses Systems gewinnen, die entscheidend vom Grad der Fehlstellung der Kardanwellenanordnung 3 abhängt. Aus den Erkenntnissen über die Übertragungsfunktion, also dem Fehlstellungssignal $S_F$, können demgemäß Rückschlüsse auf den Grad der Fehlstellung der Kardanwellenanordnung 3 gezogen werden.

Hierbei erübrigt sich ein Nachführen der Erfassung in Abhängigkeit von der aktuellen Drehzahl $n_{KW}$ der Kardanwellenanordnung 3, da Änderungen dieser Drehzahl auf Grund der Verwendung von ersten und zweiten Signalen $S_1$ und $S_2$, die mit der Drehzahl $n_{KW}$ im wesentlichen unmittelbar zusammenhängen, bei dem vorgeschlagenen Verfahren automatisch Berücksichtigung finden. Störungen ohne periodischen Anteil der zu untersuchenden Frequenz, beispielsweise Störungen statistischer Art, können bei geeigneter Auswahl der Verfahrensparameter nahezu beliebig weit unterdrückt werden und fließen daher in entsprechend geringem Maße in das Ergebnis ein.

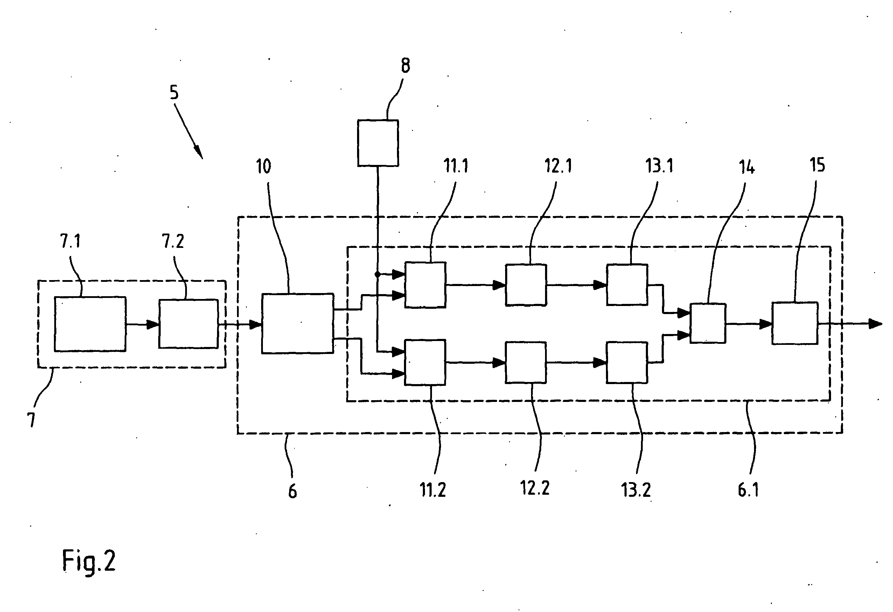

Figur 2 zeigt ein Blockschaltbild der Einrichtung 5, anhand dessen das erfindungsgemäße Verfahren beschrieben werden soll.

Bei dem ersten Signal $S_1$ handelt es sich um ein Signal, dessen Frequenz direkt proportional zur Drehfeldfrequenz $f_F$ ist. Weiterhin ist seine Frequenz $f_1$ an die bei Fehlstellung an der Kardanwellenanordnung auftretende Schädigungsfrequenz $f_s$ angepasst, die beim Zweifachen der aktuellen Drehzahl $n_{KW}$ der Kardanwellenanordnung liegt. Um diese Anpassung zu bewerkstelligen liefert der Geber 7.1 der ersten Gebereinrichtung 7 zunächst eine Schätzgröße $S_1'$ für das Drehfeld der Drehfeldmaschine 2 mit der Frequenz $f_1'$ die derjenigen des Drehfeldes entspricht. Die Frequenz $f_1'$ wird dann durch die Anpassungseinrichtung 7.2 gemäß der Beziehung

$$f_1 = f_1' \ (2 \ i \ / \ N)$$

in die Frequenz $f_1$ umgewandelt, wobei N die Polpaarzahl der Drehfeldmaschine 2 ist und i das Übersetzungsverhältnis zwischen der Drehzahl $n_{KW}$ der Kardanwellenanordnung 3 und der Drehzahl $n_L$ des Läufers 2.1 ist.

Im gezeigten Beispiel ist N = 2 und i = 1, sodass das erste Signal $S_1 = S_1'$ eine Schätzgröße für das Drehfeld der Drehfeldmaschine 2 mit der Frequenz $f_1 = f_1' = f_F$ des Drehfeldes ist. Es versteht sich daher, dass bei anderen Varianten in der Erfindung mit dieser Polpaarzahl N = 2 und dem Übersetzungsverhältnis i = 1 eine gesonderte Anpassungseinrichtung 7.2 auch fehlen kann.

Das von der zweiten Gebereinrichtung 8 gelieferte zweite Signal $S_2$ entspricht der Drehzahl $n_{KW}$ der Kardanwellenanordnung 3. In Figur 1 ist die zweite Gebereinrichtung 8 im Bereich der Antriebswelle 3.1 der Kardanwellenanordnung 3 angeordnet. Es versteht sich jedoch, dass sie bei anderen Varianten auch im Bereich der Abtriebswelle der Kardanwellenanordnung angeordnet sein kann. Es versteht sich weiterhin, dass bei anderen Varianten der Erfindung beispielsweise auch die Drehzahl $n_L$ des Läufers der Drehfeldmaschine verwendet werden kann.

Die Signale $S_1$ und $S_2$ werden in der Einrichtung und nach Art einer orthogonalen Korrelation unter Ermittlung eines Fehlstellungssignals $S_F$ miteinander korreliert, welches dann an eine mit der Stromrichtereinrichtung 1.1 verbundene Steuereinrichtung 9 zur weiteren Verarbeitung weitergegeben wird.

In einem ersten Schritt wird dabei in einer Orthogonalisierungseinrichtung 10 der Ermittlungseinrichtung 6 eine erste Komponente $K_1$ des ersten Signals $S_1$ und eine dazu orthogonale zweite Komponente $K_2$ des ersten Signals $S_1$ gebildet. Es versteht sich hierbei, dass bei anderen Varianten, bei denen die entsprechenden orthogonalen Komponenten des ersten Signals bereits ohnehin, beispielsweise durch Berechnung, vorhanden sind, eine entsprechende Orthogonalisierungseinrichtung auch fehlen kann. Die orthogonalen Komponenten können dann beispielsweise aus der Leittechnik zur weiteren Verwendung geladen werden. Dies ist insbesondere bei entsprechend moderner Leittechnik häufig der Fall.

In einem zweiten Schritt werden dann die erste und zweite Komponente des ersten Signals $S_1$ nach Art einer orthogonalen Korrelation mit dem zweiten Signal $S_2$ zur Ermittlung des Fehlstellungssignals $S_F$ korreliert.

Hierbei beinhaltet der zweite Schritt folgenden Ablauf. Zunächst wird die erste Komponente $K_1$ unter Bildung eines ersten Produkts $P_1$ in einer ersten Multipliziereinrichtung 11.1 mit dem zweiten Signal $S_2$ multipliziert sowie die zweite Komponente $K_2$ unter Bildung eines zweiten Produkts in einer zweiten Multipliziereinrichtung 11.2 mit dem zweiten Signal $S_2$ multipliziert.

Anschließend wird das am Ausgang der ersten Multipliziereinrichtung 11.1 zur Verfügung stehende erste Produkt $P_1$ unter Bildung eines ersten Integrals in einer ersten Integrationseinrichtung in Form eines ersten Tiefpasses 12.1 integriert. Ebenso wird das am Ausgang der zweiten Multipliziereinrichtung 11.2 zur Verfügung stehende zweite Produkt $P_2$ unter Bildung eines zweiten Integrals $I_2$ in einer zweiten Integrationseinrichtung in Form eines zweiten Tiefpasses 12.2 integriert.

Das am Ausgang des ersten Tiefpasses 12.1 zur Verfügung stehende erste Integral $I_1$ wird dann unter Bildung eines ersten Quadrats $Q_1$ in einer ersten Quadriereinrichtung 13.1 quadriert. Gleiches erfolgt für das am Ausgang des zweiten Tiefpasses 12.2 anliegende zweite Integral $I_2$, welches unter Bildung eines zweiten Quadrats $Q_2$ in einer zweiten Quadriereinrichtung 13.2 quadriert wird.

Schließlich werden das am jeweiligen Ausgang der ersten bzw. zweiten Quadriereinrichtung zu Verfügung stehende erste und zweite Quadrat $Q_1$ bzw. $Q_2$ in einer Addiereinrichtung 14 zu einer ersten Summe $SUM_1$ addiert.

Zur Bildung des Fehlstellungssignals $S_F$ wird dann aus der am Ausgang der Addiereinrichtung 14 zu Verfügung stehenden ersten Summe $SUM_1$ in einer Quadratwurzeleinrichtung 15 die Quadratwurzel der ersten Summe $SUM_1$ gebildet, welche das Fehlstellungssignal $S_F$ bildet.

Diese Quadratwurzel bzw. das Fehlstellungssignal $S_F$ stellt letztlich einen für den Betrag der als komplexe Zahl dargestellten Übertragungsfunktion bzw. Beschreibungsfunktion des Systems Drehfeldmaschine-Kardanwellenanordnung repräsentativen Wert dar. Dieser Wert wird an die Steuereinrichtung 9 weitergegeben, wo er zur Erfassung des Vorliegens einer nicht mehr akzeptablen Fehlstellung der Kardanwellenanordnung mit einem bestimmten Schwellenwert $S_{FS}$ verglichen werden.

Wird dieser Schwellenwert $S_{FS}$ überschritten, kann durch geeignete Ansteuerung einer entsprechenden Einrichtung durch die Steuereinrichtung 9 beispielsweise ein entsprechendes Warnsignal ausgegeben werden. Alternativ oder zusätzlich kann an die Steuereinrichtung 9 die Stromrichtereinrichtung 1.1 nach entsprechenden Vorgaben ansteuern. Dies kann bis hin zur Abschaltung der Drehfeldmaschine 2 gehen.

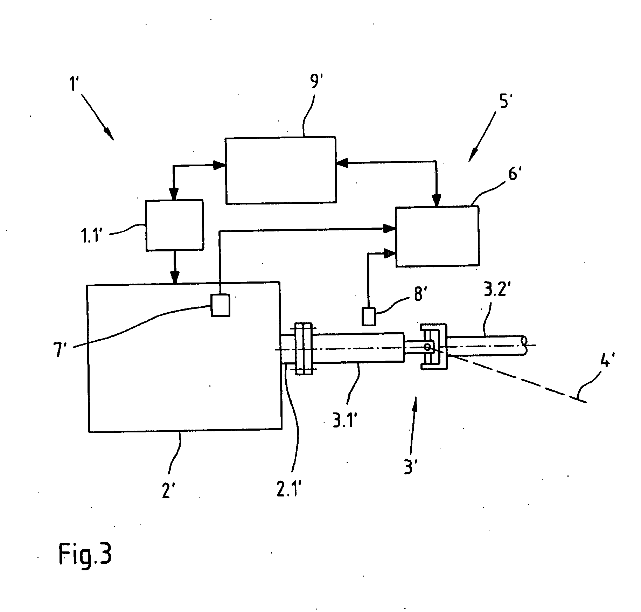

Figur 3 zeigt als Abwandlung des Beispiels aus Figur 1 eine schematische Darstellung der elektrischen Antriebseinrichtung 1' eines Schienenfahrzeugs mit einer Stromrichtereinrichtung 1.1', die eine Drehfeldmaschine 2' speist, und einer mit dem Läufer 2.1' der Drehfeldmaschine 2' unmittelbar gekoppelten Kardanwellenanordnung in Form einer Kardanwelle 3'. Die Stromrichtereinrichtung 1.1' wird dabei über eine geeignete - nicht dargestellte - Energieversorgung gespeist.

Die Antriebswelle 3.1' und die Abtriebswelle 3.2' der Kardanwelle 3' fluchten bei Normalbetrieb miteinander. Ergibt sich im Betrieb eine zumindest über längere Strekken bleibende Winkelabweichung zwischen Antriebswelle 3.1' und Abtriebswelle 3.2' der Kardanwelle 3', werden in der Kardanwelle 3' Schwingungen mit einer Frequenz $f_s$ erzeugt, die dem zweifachen der aktuellen Drehzahl $n_{KW}$ der Kardanwelle 3 entspricht. Eine solche Winkelabweichung bzw.

Fehlstellung der Kardanwelle 3' ist - aus Gründen der Deutlichkeit in extremer Form - in Figur 3 durch die gestrichelte Linie 4' angedeutet, welche die Längsachse der fehlgestellten Abtriebswelle darstellen soll. Die Amplitude dieser Schwingungen hängt vom Grad der als Fehlstellung bezeichneten Winkelabweichung zwischen Antriebswelle 3.1' und Abtriebswelle 3.2' der Kardanwelle 3' ab.

Überschreitet die Amplitude dieser Schwingungen einen gewissen zulässigen Wert bzw. liegt die Frequenz $f_s$ der Schwingungen im Resonanzbereich einzelner Teile der Kardanwelle 3' selbst oder des Antriebsstrangs, so kann es zu einer nachhaltigen Schädigung der Kardanwelle 3' oder angrenzender Bauteile des Antriebsstrangs bis hin zu deren Versagen kommen.

Um eine solche Fehlstellung rechtzeitig und zuverlässig zu detektieren ist eine erfindungsgemäße Einrichtung 5' zur Erfassung von Fehlstellungen der Kardanwelle 3 vorgesehen. Diese Einrichtung 5' dient zur Durchführung des erfindungsgemäßen Verfahrens und entspricht in ihrem Aufbau und ihrer Funktion derjenigen aus Figur 1, sodass an dieser Stelle lediglich auf die obigen Ausführungen verwiesen werden soll. Identische oder gleich wirkende Bestandteile sind dabei in Figur 3 mit denselben, durch einen Strich ergänzten Bezugsziffern gekennzeichnet.

Es versteht sich, dass die vorliegende Erfindung nicht wohl im Zusammenhang mit Schienenfahrzeugen, sondern auch im Zusammenhang mit beliebigen anderen Fahrzeugen eingesetzt werden kann. Weiterhin versteht sich, dass die vorbeschriebene Drehfeldmaschine bei anderen Ausführungen der Erfindung auch ein Generator sein kann, der über eine Kardanwellenanordnung angetrieben wird.

Die vorliegende Erfindung weist den Vorteil auf, dass in der Leittechnik moderner Antriebe bzw. Generatoren in der Regel sowohl für das Drehfeld der Drehfeldmaschine charakteristische Signale $S_1$ als auch für die Drehbewegung der Kardanwellenanordnung charakteristische Signale $S_2$ zur Verfügung stehen, sodass auch das erste und zweite Signal $S_1$ bzw. $S_2$ unmittelbar zur Verfügung stehen oder in einfacher Weise aus den zur Verfügung stehenden Signalen gewonnen werden können.

**Patentansprüche**

1. Verfahren zum Erfassen von Fehlstellungen zwischen Antriebswelle (3.1; 3.1') und Abtriebswelle (3.2; 3.2') einer Kardanwellenanordnung (3; 3'), insbesondere im Bereich des Antriebsstrangs eines Schienenfahrzeugs, die mit einer Drehfeldmaschine (2; 2') gekoppelt ist, **dadurch gekennzeichnet, dass** ein für den Grad einer Fehlstellung repräsentatives Fehlstellungssignal durch Korrelation eines für das Drehfeld der Drehfeldmaschine (2; 2') charakteristischen ersten Signals mit einem für die Drehbewegung der Kardanwellenanordnung (3; 3') charakteristischen zweiten Signal ermittelt wird.

2. Verfahren nach Anspruch 1, **dadurch gekennzeichnet, dass** die Korrelation nach Art einer orthogonalen Korrelation erfolgt.

3. Verfahren nach Anspruch 1 oder 2, **dadurch gekennzeichnet, dass** in einem ersten Schritt eine erste Komponente des ersten Signals und eine dazu orthogonale zweite Komponente des ersten Signals gebildet werden und in einem zweiten Schritt die erste und zweite Komponente nach Art einer orthogonalen Korrelation mit dem zweiten Signal zur Ermittlung des Fehlstellungssignals korreliert werden.

4. Verfahren nach Anspruch 3, **dadurch gekennzeichnet, dass** in dem zweiten Schritt

- die erste Komponente unter Bildung eines ersten Produkts mit dem zweiten Signal multipliziert wird sowie die zweite Komponente unter Bildung eines zweiten Produkts mit dem zweiten Signal multipliziert wird,
- das erste Produkt unter Bildung eines ersten Integrals integriert wird sowie das zweite Produkt unter Bildung eines zweiten Integrals integriert wird,
- das erste Integral unter Bildung eines ersten Quadrats quadriert wird sowie das zweite Integral unter Bildung eines zweiten Quadrats quadriert wird,
- das erste und zweite Quadrat zu einer ersten Summe addiert werden und
- zur Bildung des Fehlstellungssignals die Quadratwurzel der ersten Summe gebildet wird.

5. Verfahren nach einem der vorhergehenden Ansprüche, **dadurch gekennzeichnet, dass** das erste Signal ein Signal ist, dessen Frequenz proportional zur Drehfeldfrequenz ist.

6. Verfahren nach einem der vorhergehenden Ansprüche, **dadurch gekennzeichnet, dass** als erstes Signal ein an die bei Fehlstellung an der Kardanwellenanordnung (3; 3') auftretende Schädigungsfrequenz angepasstes für das Drehfeld charakteristisches Signal verwendet wird.

7. Verfahren nach Anspruch 6, **dadurch gekennzeichnet, dass** bei einer Drehfeldmaschine (2; 2') mit einer Polpaarzahl N und einem Übersetzungsverhältnis i zwischen der Drehzahl $n_{KW}$ der Kardanwellenanordnung und der Drehzahl $n_L$ des Läufers (2.1; 2.1') der Drehfeldmaschine (2; 2') das erste Signal von einem Signal gebildet ist, dessen Frequenz im wesentlichen dem 2i/N-fachen der Drehfeldfrequenz entspricht.

8. Verfahren nach einem der vorhergehenden Ansprüche, **dadurch gekennzeichnet, dass** das erste Signal proportional zu einer Schätzgröße für das Drehfeld oder proportional zu einer mit dem Drehfeld gekoppelten Größe ist.

9. Verfahren nach einem der vorhergehenden Ansprüche,
**dadurch gekennzeichnet, dass** das zweite Signal proportional zur Drehzahl des Läufers (2.1; 2.1') der Drehfeldmaschine (2; 2') oder zur Drehzahl der Kardanwellenanordnung (3; 3') ist
oder
proportional zum Drehmoment am Läufer (2.1; 2.1') der Drehfeldmaschine (2; 2') oder zum Drehmoment an der Kardanwellenanordnung (3; 3') ist.

10. Einrichtung zum Erfassen von Fehlstellungen zwischen der Antriebswelle (3.1; 3.1') und der Abtriebswelle (3.2; 3.2') einer Kardanwellenanordnung (3; 3'), insbesondere im Bereich des Antriebsstrangs eines Schienenfahrzeugs, die mit einer Drehfeldmaschine (2; 2') gekoppelt ist, **dadurch gekennzeichnet, dass** eine Ermittlungseinrichtung (6; 6') zum Ermitteln eines für den Grad einer Fehlstellung repräsentatives Fehlstellungssignals durch Korrelation eines für das Drehfeld der Drehfeldmaschine (2; 2') charakteristischen ersten Signals mit einem für die Drehbewegung der Kardanwellenanordnung (3; 3') charakteristischen zweiten Signal vorgesehen ist.

11. Einrichtung nach Anspruch 10, **dadurch gekennzeichnet, dass** die Ermittlungseinrichtung (6; 6') zum Durchführen der Korrelation nach Art einer orthogonalen Korrelation ausgebildet ist.

12. Einrichtung nach Anspruch 10 oder 11, **dadurch gekennzeichnet, dass** die Ermittlungseinrichtung (6; 6') eine mit einer ersten Gebereinrichtung (7; 7') zur Ausgabe des ersten Signals verbundene Orthogonalisierungseinrichtung (10) zur Zerlegung des ersten Signals in eine erste Komponente und eine dazu orthogonale zweite Komponente sowie eine Korrelationseinrichtung (6.1) zum Korrelieren der ersten und zweiten Komponente nach Art einer orthogonalen Korrelation mit dem zweiten Signal zur Ermittlung des Fehlstellungssignals umfasst.

13. Einrichtung nach Anspruch 12, **dadurch gekennzeichnet, dass** die Korrelationseinrichtung (6.1)

- eine mit der Orthogonalisierungseinrichtung (10) verbundene erste Multipliziereinrichtung (11.1) zur Bildung eines ersten Produkts aus der ersten Komponente und dem zweiten Signal sowie eine mit der Orthogonalisierungseinrichtung (10) verbundene zweite Multipliziereinrichtung (11.2) zur Bildung eines zweiten Produkts aus der zweiten Komponente und dem zweiten Signal umfasst,
- eine mit der ersten Multipliziereinrichtung (11.1) verbundene erste Integriereinrichtung (12.1) zur Bildung eines ersten Integrals über dem ersten Produkt sowie eine mit der zweiten Multipliziereinrichtung (11.2) verbundene zweite Integriereinrichtung (12.2) zur Bildung eines zweiten Integrals über dem zweiten Produkt umfasst,
- eine mit der ersten Integriereinrichtung (12.1) verbundene erste Quadriereinrichtung (13.1) zur Bildung eines ersten Quadrats aus dem ersten Integral sowie eine mit der zweiten Integriereinrichtung (12.2) verbundene zweite Quadriereinrichtung (13.2) zur Bildung eines zweiten Quadrats aus dem zweiten Integral umfasst,
- eine mit der ersten und zweiten Quadriereinrichtung (13.1, 13.2) verbundene Addiereinrichtung (14) zur Bildung einer ersten Summe aus dem ersten und zweiten Quadrat umfasst, und
- eine mit der Addiereinrichtung (14) verbundene Quadratwurzeleinrichtung (15) zur Bildung des Fehlstellungssignals in Form der Quadratwurzel der ersten Summe umfasst.

14. Einrichtung nach einem der Ansprüche 10 bis 13, **dadurch gekennzeichnet, dass** eine mit der Ermittlungseinrichtung (6) verbundene erste Gebereinrichtung (7) vorgesehen ist, die zur Weitergabe eines ersten Signals in Form eines Signals ausgebildet ist, dessen Frequenz proportional zur Drehfeldfrequenz ist.

15. Einrichtung nach einem der Ansprüche 10 bis 14, **dadurch gekennzeichnet, dass** die erste Gebereinrichtung (7; 7') zur Ausgabe eines ersten Signals in Form eines an die bei Fehlstellung an der Kardanwellenanordnung auftretende Schädigungsfrequenz angepassten, für das Drehfeld charakteristischen Signals ausgebildet ist.

16. Einrichtung nach Anspruch 15, **dadurch gekennzeichnet, dass** die erste Gebereinrichtung (7; 7') bei einer Drehfeldmaschine (2; 2') mit einer Polpaarzahl N und einem Übersetzungsverhältnis i zwischen der Drehzahl $n_{KW}$ der Kardanwellenanordnung (3; 3') und der Drehzahl $n_L$ des Läufers (2.1; 2.1') der Drehfeldmaschine (2; 2') zur Ausgabe eines ersten Signals ausgebildet ist, dessen Frequenz im wesentlichen dem 2i/N-fachen der Drehfeldfrequenz entspricht.

17. Einrichtung nach einem der Ansprüche 10 bis 16, **dadurch gekennzeichnet, dass** die erste Gebereinrichtung (7; 7') zur Ausgabe eines ersten Signals ausgebildet ist, das proportional zu einer Schätzgröße für das Drehfeld oder proportional zu einer mit dem Drehfeld gekoppelten Größe ist.

18. Einrichtung nach einem der Ansprüche 10 bis 17, **dadurch gekennzeichnet, dass** eine mit der Ermittlungseinrichtung (6; 6') verbundene zweite Gebereinrichtung (8; 8') vorgesehen ist, die zur Ausgabe eines zweiten Signals ausgebildet ist, das
proportional zur Drehzahl des Läufers (2.1; 2.1') der Drehfeldmaschine (2; 2') oder zur Drehzahl der Kardanwellenanordnung (3; 3') ist
oder
proportional zum Drehmoment am Läufer (2.1; 2.1') der Drehfeldmaschine (2; 2') oder zum Drehmoment an der Kardanwellenanordnung (3; 3') ist.

19. Schienenfahrzeug mit einer eine Drehfeldmaschine (2; 2') und eine damit gekoppelte Kardanwellenanordnung (3; 3') umfassenden Antriebseinrichtung (1; 1') und einer Einrichtung (5; 5') zum Erfassen von Fehlstellungen zwischen Antriebswelle (3.1; 3.1') und Abtriebswelle (3.2; 3.2') der Kardanwellenanordnung (3) nach einem der Ansprüche 10 bis 18.

**Claims**

1. Method for detecting misalignments between the drive shaft (3.1; 3.1') and the driven shaft (3.2; 3.2') of a cardan shaft arrangement (3; 3'), in particular in the drive train of a rail vehicle, which is coupled to an induction machine (2; 2'), **characterized in that** a misalignment signal representative of the degree of a misalignment is determined by correlating a first signal characteristic of the rotating field of the induction machine (2; 2') with a second signal characteristic of the rotational movement of the cardan shaft arrangement (3; 3').

2. Method according to Claim 1, **characterized in that** the correlation takes place in the manner of an orthogonal correlation.

3. Method according to Claim 1 or 2, **characterized in that**, in a first step, a first component of the first signal and a second component of the first signal which is orthogonal thereto are formed and, in a second step, the first and second components are correlated with the second signal in the manner of an orthogonal correlation in order to determine the misalignment signal.

4. Method according to Claim 3, **characterized in that**, in the second step,

   - the first component is multiplied by the second signal to form a first product and the second component is multiplied by the second signal to form a second product,
   - the first product is integrated to form a first integral and the second product is integrated to form a second integral,
   - the first integral is squared to form a first square and the second integral is squared to form a second square,
   - the first and second squares are added to form a first sum, and
   - the square root of the first sum is generated to form the misalignment signal.

5. Method according to any one of the preceding claims, **characterized in that** the first signal is a signal having a frequency proportional to the rotating field frequency.

6. Method according to any one of the preceding claims, **characterized in that** a signal characteristic of the rotating field and adapted to the impaired frequency occurring in the event of a misalignment of the cardan shaft arrangement (3; 3') is used as the first signal.

7. Method according to Claim 6, **characterized in that**, in the case of an induction machine (2; 2') with a number N of pole pairs and a transmission ratio i between the rotational speed $n_{KW}$ of the cardan shaft arrangement and the rotational speed $n_L$ of the rotor (2.1; 2.1') of the induction machine (2; 2'), the first signal is formed by a signal having a frequency which essentially corresponds to 2i/N times the rotating field frequency.

8. Method according to any one of the preceding claims, **characterized in that** the first signal is proportional to an estimated variable for the rotating field or is proportional to a variable coupled to the rotating field.

9. Method according to any one of the preceding claims, **characterized in that** the second signal is proportional to the rotational speed of the rotor (2.1; 2.1') of the induction machine (2; 2') or to the rotational speed of the cardan shaft arrangement (3; 3')
or
is proportional to the torque on the rotor (2.1; 2.1') of the induction machine (2; 2') or to the torque on the cardan shaft arrangement (3; 3').

10. Device for detecting misalignments between the drive shaft (3.1; 3.1') and the driven shaft (3.2; 3.2') of a cardan shaft arrangement (3; 3'), in particular in the drive train of a rail vehicle, which is coupled to an induction machine (2; 2'), **characterized in that** a determination device (6; 6') is provided for determining a misalignment signal representative of the degree of a misalignment by correlating a first signal characteristic of the rotating field of the induction machine (2; 2') with a second signal characteristic of the rotational movement of the cardan shaft arrangement (3; 3').

11. Device according to Claim 10, **characterized in that** the determination device (6; 6') is designed to carry out the correlation in the manner of an orthogonal correlation.

12. Device according to Claim 10 or 11, **characterized in that** the determination device (6; 6') comprises an orthogonalization device (10) which is connected to a first transmitter device (7; 7') for outputting the first signal and is designed to break down the first signal into a first component and a second component which is orthogonal thereto, and also a correlation device (6.1) for correlating the first and second components with the second signal in the manner of an orthogonal correlation in order to determine the misalignment signal.

13. Device according to Claim 12, **characterized in that** the correlation device (6.1)

- comprises a first multiplication device (11.1) which is connected to the orthogonalization device (10) and is designed to form a first product from the first component and the second signal, and also a second multiplication device (11.2) which is connected to the orthogonalization device (10) and is designed to form a second product from the second component and the second signal,
- comprises a first integration device (12.1) which is connected to the first multiplication device (11.1) and is designed to form a first integral from the first product, and also a second integration device (12.2) which is connected to the second multiplication device (11.2) and is designed to form a second integral from the second product,
- comprises a first squaring device (13.1) which is connected to the first integration device (12.1) and is designed to form a first square from the first integral, and also a second squaring device (13.2) which is connected to the second integration device (12.2) and is designed to form a second square from the second integral,
- comprises an adding device (14) which is connected to the first and second squaring devices (13.1, 13.2) and is designed to form a first sum from the first and second squares, and
- comprises a square root device (15) which is connected to the adding device (14) and is designed to form the misalignment signal in the form of the square root of the first sum.

14. Device according to any one of Claims 10 to 13, **characterized in that** a first transmitter device (7) is provided, which is connected to the determination device (6) and is designed to transmit a first signal in the form of a signal having a frequency proportional to the rotating field frequency.

15. Device according to any one of Claims 10 to 14, **characterized in that** the first transmitter device (7; 7') is designed to output a first signal in the form of a signal characteristic of the rotating field and adapted to the impaired frequency occurring in the event of a misalignment of the cardan shaft arrangement.

16. Device according to Claim 15, **characterized in that** the first transmitter device (7; 7'), in the case of an induction machine (2; 2') with a number N of pole pairs and a transmission ratio i between the rotational speed $n_{KW}$ of the cardan shaft arrangement (3; 3') and the rotational speed $n_L$ of the rotor (2.1; 2.1') of the induction machine (2; 2'), is designed to output a first signal having a frequency which essentially corresponds to 2i/N times the rotating field frequency.

17. Device according to any one of Claims 10 to 16, **characterized in that** the first transmitter device (7; 7') is designed to output a first signal which is proportional to an estimated variable for the rotating field or is proportional to a variable coupled to the rotating field.

18. Device according to any one of Claims 10 to 17, **characterized in that** a second transmitter device (8; 8') is provided, which is connected to the determination device (6; 6') and is designed to output a second signal which is proportional to the rotational speed of the rotor (2.1; 2.1') of the induction machine (2; 2') or to the rotational speed of the cardan shaft arrangement (3; 3') or
is proportional to the torque on the rotor (2.1; 2.1') of the induction machine (2; 2') or to the torque on the cardan shaft arrangement (3; 3').

19. Rail vehicle with a drive device (1; 1') comprising an induction machine (2; 2') and a cardan shaft arrangement (3; 3') coupled thereto, and also a device (5; 5') for detecting misalignments between the drive shaft (3.1; 3.1') and the driven shaft (3.2; 3.2') of the cardan shaft arrangement (3) according to any one of Claims 10 to 18.

**Revendications**

1. Procédé de détection de défauts d'alignement entre l'arbre d'entraînement (3.1 ; 3.1') et l'arbre de sortie (3.2 ; 3.2') d'un système d'arbre à cardan (3 ; 3'), en particulier dans la zone de la ligne de transmission d'un véhicule sur rails, lequel système est couplé à un générateur à induction (2 ; 2'), **caractérisé en ce qu'**un signal de défaut d'alignement, représentatif du degré de défaut d'alignement, est déterminé par la corrélation d'un premier signal, caractéristique du champ magnétique rotatif du générateur à induction (2 ; 2'), avec un deuxième signal, caractéristique du mouvement de rotation du système d'arbre à cardan (3 ; 3').

2. Procédé selon la revendication 1, **caractérisé en ce que** la corrélation est effectuée selon une corrélation orthogonale.

3. Procédé selon la revendication 1 ou 2, **caractérisé en ce qu'**au cours d'une première étape sont formées une première composante du premier signal et une deuxième composante du premier signal, orthogonale à celle-ci, et, au cours d'une deuxième étape, la première et la deuxième composante sont corrélées selon une corrélation orthogonale avec le deuxième signal pour déterminer le signal de défaut d'alignement.

4. Procédé selon la revendication 3, **caractérisé en ce qu'**au cours de la deuxième étape

   - la première composante est multipliée avec le deuxième signal pour former un premier produit, ainsi que la deuxième composante est multipliée avec le deuxième signal pour former un deuxième produit,
   - le premier produit est intégré pour former une première intégrale, ainsi que le deuxième produit est intégré pour former une deuxième intégrale,
   - la première intégrale est élevée au carré pour former un premier carré, ainsi que la deuxième intégrale est élevée au carré pour former un deuxième carré,
   - le premier et le deuxième carré sont additionnés pour former une première somme, et
   - la racine carrée de la première somme est calculée pour former le signal de défaut d'alignement.

5. Procédé selon l'une quelconque des revendications précédentes, **caractérisé en ce que** le premier signal est un signal dont la fréquence est proportionnelle à la fréquence du champ magnétique rotatif.

6. Procédé selon l'une quelconque des revendications précédentes, **caractérisé en ce qu'**un signal caractéristique pour le champ magnétique rotatif, adapté à la fréquence de détérioration générée en cas de défaut d'alignement sur le système d'arbre à cardan (3; 3'), est utilisé comme premier signal.

7. Procédé selon la revendication 6, **caractérisé en ce que**, dans un générateur à induction (2 ; 2') avec un nombre de paires de pôles N et un rapport de conversion i entre la vitesse de rotation $n_{KW}$ du système d'arbre à cardan et la vitesse de rotation $n_L$ du rotor (2.1 ; 2.1') du générateur à induction (2 ; 2'), le premier signal est formé par un signal dont la fréquence correspond sensiblement à 2i/N fois la fréquence du champ magnétique rotatif.

8. Procédé selon l'une quelconque des revendications précédentes, **caractérisé en ce que** le premier signal est proportionnel à une grandeur d'évaluation pour le champ magnétique rotatif ou proportionnel à une grandeur couplée au champ magnétique rotatif.

9. Procédé selon l'une quelconque des revendications précédentes, **caractérisé en ce que** le deuxième signal est proportionnel à la vitesse de rotation du rotor (2.1 ; 2.1') du générateur à induction (2 ; 2') ou à la vitesse de rotation du système d'arbre à cardan (3 ; 3'),
ou
est proportionnel au couple de rotation sur le rotor (2.1 ; 2.1') du générateur à induction (2 ; 2') ou au couple de rotation sur le système d'arbre à cardan (3 ; 3').

10. Dispositif de détection de défauts d'alignement entre l'arbre d'entraînement (3.1 ; 3.1') et l'arbre de sortie (3.2 ; 3.2') d'un système d'arbre à cardan (3 ; 3'), en particulier dans la zone de la ligne de transmission d'un véhicule sur rails, lequel système est couplé à un générateur à induction (2 ; 2'), **caractérisé en ce qu'**il est prévu une unité de détermination (6 ; 6') destinée à déterminer un signal de défaut d'alignement, représentatif du degré de défaut d'alignement, par la corrélation d'un premier signal, caractéristique du champ magnétique rotatif du générateur à induction (2 ; 2'), avec un deuxième signal, caractéristique du mouvement de rotation du système d'arbre à cardan (3 ; 3').

11. Dispositif selon la revendication 10, **caractérisé en ce que** l'unité de détermination (6 ; 6') est conçue pour effectuer la corrélation selon une corrélation orthogonale.

12. Dispositif selon la revendication 10 ou 11, **caractérisé en ce que** l'unité de détermination (6 ; 6') comporte une unité d'orthogonalisation (10), qui est reliée à une première unité émettrice (7 ; 7'), destinée à émettre le premier signal, et qui est destinée à décomposer le premier signal en une première composante et une deuxième composante orthogonale à celle-ci, ainsi qu'une unité de corrélation (6.1) destinée à corréler selon une corrélation orthogonale la première et la deuxième composante avec le deuxième signal en vue de déterminer le signal de défaut d'alignement.

13. Dispositif selon la revendication 12, **caractérisé en ce que** l'unité de corrélation (6.1) comporte

- une première unité de multiplication (11.1) qui est reliée à l'unité d'orthogonalisation (10) pour former un premier produit formé par la première composante et le deuxième signal, ainsi qu'une deuxième unité de multiplication (11.2) qui est reliée à l'unité d'orthogonalisation (10) pour former un deuxième produit formé par la deuxième composante et le deuxième signal,
- une première unité d'intégration (12.1) qui est reliée à la première unité de multiplication (11.1) pour former une première intégrale par l'intermédiaire du premier produit, ainsi qu'une deuxième unité d'intégration (12.2) qui est reliée à la deuxième unité de multiplication (11.2) pour former une deuxième intégrale par l'intermédiaire du deuxième produit,
- une première unité d'élévation au carré (13.1) qui est reliée à la première unité d'intégration (12.1) pour former un premier carré à partir de la première intégrale, ainsi qu'une deuxième unité d'élévation au carré (13.2) qui est reliée à la deuxième unité d'intégration (12.2) pour former un deuxième carré à partir de la deuxième intégrale,
- une unité d'addition (14) qui est reliée à la première et à la deuxième unité d'élévation au carré (13.1, 13.2) pour former une première somme formée par le premier et le deuxième carré, et
- une unité de racine carrée (15) qui est reliée à l'unité d'addition (14) pour former le signal de défaut d'alignement sous la forme de la racine carrée de la première somme.

14. Dispositif selon l'une quelconque des revendications 10 à 13, **caractérisé en ce qu'**il est prévu une première unité émettrice (7), qui est reliée à l'unité de détermination (6) et qui est conçue pour transmettre un premier signal sous la forme d'un signal dont la fréquence est proportionnelle à la fréquence du champ magnétique rotatif.

15. Dispositif selon l'une quelconque des revendications 10 à 14, **caractérisé en ce que** la première unité émettrice (7 ; 7') est conçue pour délivrer un premier signal sous la forme d'un signal caractéristique pour le champ magnétique rotatif, adapté à la fréquence de détérioration générée en cas de défaut d'alignement sur le système d'arbre à cardan.

16. Dispositif selon la revendication 15, **caractérisé en ce que** la première unité émettrice (7 ; 7'), dans un générateur à induction (2 ; 2') avec un nombre de paires de pôles N et un rapport de conversion i entre la vitesse de rotation $n_{KW}$ du système d'arbre à cardan et la vitesse de rotation $n_L$ du rotor (2.1 ; 2.1') du générateur à induction (2 ; 2'), est conçue pour émettre un premier signal dont la fréquence correspond sensiblement à 2i/N fois la fréquence du champ magnétique rotatif.

**17.** Dispositif selon l'une quelconque des revendications 10 à 16, **caractérisé en ce que** la première unité émettrice (7 ; 7') est conçue pour émettre un premier signal qui est proportionnel à une grandeur d'évaluation pour le champ magnétique rotatif ou proportionnel à une grandeur couplée au champ magnétique rotatif.

**18.** Dispositif selon l'une quelconque des revendications 10 à 17, **caractérisé en ce qu'**il est prévu une deuxième unité émettrice (8 ; 8'), reliée à l'unité de détermination (6 ; 6') et conçue pour émettre un deuxième signal qui est proportionnel à la vitesse de rotation du rotor (2.1 ; 2.1') du générateur à induction (2 ; 2') ou à la vitesse de rotation du système d'arbre à cardan (3 ; 3'),
ou
est proportionnel au couple de rotation sur le rotor (2.1 ; 2.1') du générateur à induction (2 ; 2') ou au couple de rotation sur le système d'arbre à cardan (3 ; 3').

**19.** Véhicule sur rails comportant un système d'entraînement (1 ; 1'), qui comporte un générateur à induction (2 ; 2') et un système d'arbre à cardan (3 ; 3') couplé à ce dernier, et un dispositif de détection de défauts d'alignement entre l'arbre d'entraînement (3.1 ; 3.1') et l'arbre de sortie (3.2 ; 3.2') d'un système d'arbre à cardan (3 ; 3') selon l'une quelconque des revendications 10 à 18.

Fig.1

Fig.2

EP 1 371 515 B1

Fig.3